# EUROPÄISCHE PATENTSCHRIFT

(11) **EP 3 725 706 B1**
(45) Veröffentlichungstag und Bekanntmachung des Hinweises auf die Patenterteilung: **13.10.2021**
(21) Anmeldenummer: 20170389.9
(22) Anmeldetag: 20.04.2020
(51) Int. Cl.: B65G 15/12

(54) **VARIABLES TRANSPORTSYSTEM UND VERFAHREN ZUR VERWENDUNG EINES SOLCHEN TRANSPORTSYSTEMS**
VARIABLE TRANSPORT SYSTEM AND METHOD FOR USING SUCH A TRANSPORT SYSTEM
SYSTÈME DE TRANSPORT VARIABLE ET PROCÉDÉ D'UTILISATION D'UN TEL SYSTÈME DE TRANSPORT

(30) Priorität: 18.04.2019 DE 102019205670
(43) Veröffentlichungstag der Anmeldung: 21.10.2020
(73) Patentinhaber: Weber Maschinenbau GmbH Breidenbach, 35236 Breidenbach (DE)
(72) Erfinder: LEHMANN, Stefan, 17034 Neubrandenburg (DE); VOGLER, Mario, 17098 Friedland (DE); WENDT, Paul, 17506 Gützkow (DE)
(74) Vertreter: Grünecker Patent- und Rechtsanwälte PartG mbB

(56) Entgegenhaltungen:
- DE-A1- 4 214 886
- DE-A1-102013 100 806
- DE-A1-102016 112 130
- JP-A- H08 282 818
- JP-A- 2018 131 296
- US-A- 5 069 440
- US-A1- 2014 174 891
- US-A1- 2016 229 575
- US-B1- 6 390 766

## Beschreibung

Die Erfindung betrifft ein System zum Fördern von Objekten entlang einer Transportrichtung sowie ein Verfahren zur Verwendung eines solchen Systems.

Bei solchen Systemen ist es bekannt, mehrere parallel zueinander verlaufende Spuren vorzusehen, um beispielsweise von Lebensmittelprodukten abgetrennte Scheiben und/oder aus zumindest einer Scheibe gebildete Portionen parallel zueinander auf verschiedenen Spuren einer Verpackungsmaschine zuzuführen. Eine Breite der Spuren ist dabei in der Regel an eine Breite der zu transportierenden Produkte bzw. Portionen angepasst. Falls Produkte mit einer anderen Breite aufgeschnitten werden sollen, muss bislang die gesamte Förderstrecke ausgetauscht werden. Hierdurch entstehen hohe Kosten, da der Umbau aufwendig ist und daher lange dauert. Die Druckschrifte DE 10 2013 100 806 A1 und DE 10 2016 112 130 A1 offenbaren solche Systeme.

Es ist eine Aufgabe der vorliegenden Erfindung, ein System zum Fördern von Objekten entlang einer Transportrichtung bereitzustellen, welches es ermöglicht, auf schnelle und einfache Art und Weise auf zu transportierende Produkte unterschiedlicher Breite angepasst zu werden.

Die Aufgabe wird gelöst durch ein System nach Anspruch 1 und insbesondere dadurch, dass das System eine Basis umfasst, welche mehrere im Wesentlichen nebeneinander quer zu der Transportrichtung angeordnete mechanische Schnittstellen bildet, und mehrere jeweils genau eine Spur bildenden Transporteinheiten umfasst, wobei jede der Transporteinheiten eine zu zumindest einer der mechanischen Schnittstellen der Basis korrespondierende mechanische Schnittstelle aufweist, die derart ausgebildet ist, dass die Transporteinheiten mit der Basis mechanisch verbindbar sind und jeweils getrennt voneinander von der Basis vollständig abnehmbar sind, und wobei die Transporteinheiten zumindest in zwei unterschiedlichen Breiten, d.h. in einer schmaleren Variante und einer breiteren Variante, bereitgestellt sind und zumindest eine der mechanischen Schnittstellen der Basis dazu ausgebildet und eingerichtet ist, wechselweise mit einer Schnittstelle der schmaleren Variante oder einer Schnittstelle der breiteren Variante der Transporteinheit verbunden zu werden, sodass das System hinsichtlich der Anzahl und/oder Breite der Spuren veränderbar ist.

Der Erfindung liegt der allgemeine Gedanke zugrunde, eine Umrüstung hinsichtlich der Anzahl und Breite der Spuren zu vereinfachen, indem ausschließlich die die Spuren definierenden Transporteinheiten, welche in Form von Bandkassetten ausgebildet sein können, ausgetauscht werden, die schwere und meist immobile Basis aber nicht ausgetauscht wird.

Vorteilhafte Ausbildungen der Erfindung sind den Unteransprüchen, der Beschreibung und den Zeichnungen zu entnehmen.

Eine besonders vorteilhafte Anwendung dieser Grundidee ergibt sich bei Wägevorrichtungen, die in eine Förderstrecke integrierbar sind. Somit kann das System zum Wiegen von entlang einer Transportrichtung geförderten Objekten ausgebildet und eingerichtet sein. Hierzu kann die Basis mehrere im Wesentlichen nebeneinander quer zu der Transportrichtung angeordnete Wägezellen umfassen.

Jede der Wägezellen kann eine Halterung tragen, die eine der mechanischen Schnittstellen der Basis bildet, sodass die Transporteinheiten jeweils mit zumindest einer der Halterungen mechanisch verbindbar sind, um ein auf der jeweiligen Transporteinheit liegendes Objekt zu wiegen.

In diesem Fall bilden die wechselbaren Transporteinheiten unterschiedlicher Breite einen sogenannten Wägetisch, d.h. eine Auflage für ein zu wiegendes Objekt.

Um die Transporteinheiten anzutreiben, kann zumindest ein Antrieb vorgesehen sein. Beispielsweise kann der zumindest eine Antrieb als Elektromotor ausgebildet sein. Der Antrieb kann wahlweise an der Basis, insbesondere der Halterung, oder der Transporteinheit angeordnet sein. Beispielsweise kann der zumindest eine Antrieb als Direktantrieb in einer Umlenkung der Transporteinheit verbaut sein. Kostengünstiger ist es jedoch, den zumindest einen Antrieb an der Basis, insbesondere der Halterung, anzuordnen und mittels eines Antriebsmittels zur Übertragung eines Drehmoments die Antriebsleistung auf die Antriebswelle der Transporteinheit zu übertragen. Vorzugsweise wird das Antriebsmittel durch einen Zahnriemen gebildet. Alternativ oder zusätzlich dazu können Zahnräder vorgesehen sein, um die vom Antrieb aufgebrachte Antriebsleistung auf die Transporteinheit zu übertragen.

Um die Transporteinheiten besonders einfach auswechseln zu können, ist die Schnittstelle vorzugsweise derart ausgebildet, dass die Transporteinheiten werkzeuglos austauschbar sind. Es wird somit kein Werkzeug benötigt, um die Transporteinheiten von der Basis zu lösen oder mit ihr zu koppeln. Vorzugsweise ist es nicht notwendig, ein Betätigungselement wie beispielsweise einen Hebel oder einen Knopf zu betätigen, um die Transporteinheit von der Basis lösen zu können. Es ist dann möglich, die Transporteinheit direkt, d.h. in einer durchgängigen Bewegung, von der Basis abzunehmen und auf ihr zu befestigen. Vorzugsweise ist die Schnittstelle derart ausgebildet, dass die Transporteinheit einhändig von der Basis abnehmbar ist.

Die Schnittstelle kann zur Vereinfachung des Austausches der jeweiligen Transporteinheit eine Rast- und/oder Schnappverbindung umfassen. Die Transporteinheit kann somit auf die Basis bzw. die Halterung aufgelegt werden und durch Verrasten mit der Basis verbunden werden. Vorzugsweise weist eine der Schnittstellen hierzu ein federvorgespanntes Element, das auch als Druckstück bezeichnet werden kann, auf, welches ein weiteres Element der anderen Schnittstelle formschlüssig hält, wenn die Transporteinheit und die Basis miteinander gekoppelt sind. Vorzugsweise ist die Rast- und/oder Schnappverbindung durch einseitiges oder beidseitiges Anheben der Transporteinheit entriegelbar.

Gemäß einem Aspekt ist die Rast- und/oder Schnappverbindung im auslaufseitigen oder mittleren Bereich der Transporteinheit angeordnet. Zudem kann eine von den Schnittstellen gebildete Schwenkachse im einlaufseitigen Bereich ausgebildet sein. Hierdurch ist es besonders einfach, die Transporteinheit zu entfernen, da ein großer Hebel genutzt werden kann, um die Rast- und/oder Schnappverbindung zu lösen. Der zumindest eine Antrieb ist vorzugsweise im einlaufseitigen Bereich des Systems angeordnet.

Gemäß einem bevorzugten Aspekt ist die Schnittstelle so ausgebildet und eingerichtet, dass die Transporteinheit unter Verwendung des geringsten Kraftaufwands von der Basis abgenommen werden kann, wenn die Transporteinheit am auslauf- seitigen Ende nach oben gezogen wird. Insbesondere kann die Schnittstelle so ausgebildet und eingerichtet sein, dass eine Druckbelastung auf den auslaufseitigen Bereich kein Entkoppeln der Schnittstelle bewirkt. Zudem kann die Schnittstelle so ausgebildet und eingerichtet sein, dass auch eine von einem Benutzer versehentlich aufgebrachte Druckbelastung auf den einlaufseitigen Bereich kein Entkoppeln der Schnittstelle bewirkt.

Eine der Schnittstellen kann mehrere Ausnehmungen aufweisen, in die Elemente der anderen Schnittstelle eingreifen, um eine Verschiebung der Transporteinheit relativ zur Basis in einer Richtung, insbesondere der Transportrichtung, zu verhindern.

Vorzugsweise überspannt die breitere Variante der Transporteinheiten zumindest zwei Schnittstellen der Basis. Sofern es sich bei dem System um eine Wägevorrichtung handelt, kann die breitere Variante der Transporteinheiten zwei Wägezellen überspannen. Gemäß einer Ausführungsform umfasst das System eine Variante der Transporteinheiten, welche genau zwei Schnittstellen der Basis bzw. zwei Wägezellen überspannt.

Gemäß einem Aspekt weist die schmalere Variante der Transporteinheiten eine Schnittstelle auf und die breitere Variante der Transporteinheiten zumindest zwei dieser Schnittstellen auf, um mit zumindest zwei der Schnittstellen der Basis verbunden zu werden. Vorzugsweise kann eine breitere Variante mit denselben Schnittstellen der Basis oder der Halterung verbunden werden, wie mehrere schmale Varianten.

Gemäß einem vorteilhaften Aspekt ist die breitere Variante der Transporteinheit mit mehreren Halterungen verbindbar, um im Betrieb mehrere oder alle überspannten Wägezellen zu beaufschlagen. Alternativ dazu kann die breitere Variante eine geringere Anzahl an Wägezellen, beispielsweise nur eine Wägezelle, beaufschlagen.

Gemäß einem Aspekt umfasst das System zumindest eine Transporteinheit, die eine Codierung aufweist, durch die das System automatisch erkennt, mit wie vielen und/oder welchen Wägezellen die Transporteinheit verbunden ist. Vorzugsweise weist jede der Transporteinheiten eine solche Codierung auf.

Gemäß einem weiteren Aspekt ist jede der Transporteinheiten separat antreibbar. Beispielsweise kann mittels Kupplungen ein Motor mit den jeweiligen anzutreibenden Transporteinheiten gekoppelt werden. Vorteilhafterweise ist jeder der Transporteinheiten ein separater Antrieb bzw. Antriebsmotor zugeordnet. So können die Transporteinheiten auf einfache Weise mit unterschiedlichen Geschwindigkeiten angetrieben werden.

Ein weiterer unabhängiger Aspekt der Erfindung betrifft ein System mitmehreren im Wesentlichen nebeneinander quer zu der Transportrichtung angeordneten Wägezellen, und mehreren jeweils genau eine Spur bildenden Transporteinheiten, wobei jede der Wägezellen eine Halterung trägt, die zumindest eine mechanische Schnittstelle aufweist, und wobei jede der Transporteinheiten eine korrespondierende mechanische Schnittstelle aufweist, sodass die Transporteinheiten jeweils mit zumindest einer der Halterungen mechanisch verbindbar sind, um ein auf der jeweiligen Transporteinheit liegendes Objekt zu wiegen und sodass die Transporteinheiten jeweils von der zugeordneten Halterung vollständig abnehmbar sind, wobei zumindest eine mit einem Antriebsmotor für die jeweilige Transporteinheit gekoppelte Antriebswelle eine erste Verzahnung aufweist und eine derTransporteinheit zugeordnete Antriebswelle eine zweite Verzahnung aufweist, und wobei ein Zahnriemen vorgesehen ist, der in die erste Verzahnung und die zweite Verzahnung eingreift.

Hierdurch kann im Betrieb ein vom Antriebsmotor erzeugtes Drehmoment schlupffrei auf die Transporteinheit übertragen werden. Somit ist es möglich, das zu fördernde Objekt präzise eine bestimmte Strecke auf der Transporteinheit zufördern.

Zudem ist es durch die Kopplung der Transporteinheiten und deren jeweiligem Antriebsmotor mittels des Zahnriemens auf einfache und schnelle Art und Weise möglich, die Transporteinheit mit dem Antriebsmotor zu koppeln und zu entkoppeln. Dies erleichtert ebenfalls das Koppeln der Transporteinheiten mit der restlichen Basis.

Um die Lagerbelastungen zu verringern und bei einer Verwendung als Wägevorrichtung keine Fehlmessungen durch den Zahnriemen zu erzeugen, kann der Zahnriemen im Ruhezustand im Wesentlichen zugspannungsfrei um die mit dem Antriebsmotor gekoppelte Antriebswelle und um die der Transporteinheit zugeordnete Antriebswelle herumgelegt sein. Durch die verringerte Lagerbelastung können günstigere Lager verwendet werden und so die Gesamtkosten des Systems reduziert werden.

Vorzugsweise ist die der Transporteinheit zugeordnete Antriebswelle als Hohlwelle ausgebildet, welche drehbar an einem Rahmen der Transporteinheit und insbesondere drehbar auf einem drehfest angeordneten Stab gelagert ist. Die Antriebswelle kann mehrere umlaufende Rillen zur axialen Fixierung von Riemen aufweisen.

Zudem definiert der Zahnriemen einen Innenbereich, in dem ein, insbesondere einteilig ausgebildeter, Eingreifschutz angeordnet sein kann. Um das Bedienpersonal zu schützen, kann in einem Innenbereich des Zahnriemens ein Eingreifschutz angeordnet sein. Dieser Eingreifschutz ist vorzugsweise einteilig ausgebildet und/oder füllt im Wesentlichen den gesamten Innenbereich des Zahnriemens. Der Eingreifschutz ist vorzugsweise Teil der Basis bzw. der Halterung.

Damit der, vorzugsweise zugspannungsfrei, um die mit dem Antriebsmotor gekoppelte Antriebswelle und um die der Transporteinheit zugeordnete Antriebswelle herumgelegte Zahnriemen fixiert ist, kann der Zahnriemen durch zwei Endlosförderelemente der Transporteinheit axial auf der der Transporteinheit zugeordneten Antriebswelle fixiert sein. In anderen Worten kann sich der Zahnriemen im Betrieb in einem Zwischenraum zwischen zwei Riemen bzw. Bändern befinden. Um den Zahnriemen auf einfache Weise abnehmen zu können, kann der Zahnriemen ohne axiale Fixierung auf der Antriebswelle des Antriebsmotors anliegen.

Vorzugsweise ist die der Transporteinheit zugeordnete Antriebswelle als Umlenkung für die Endlosförderelemente ausgebildet. Hierdurch wird der Zahnriemen über einen Umfangswinkel von vorzugsweise 180° von den Endlosförderelementen gehalten. Um den Zahnriemen besonders einfach entfernen zu können ist es vorteilhaft, wenn eines der zwei Endlosförderelemente ein äu-ßerstes Endlosförderelement ist.

Gemäß einem Aspekt weist die Transporteinheit ein oder mehrere Endlosförderelemente, beispielsweise Endlosriemen, auf, welche um mindestens zwei Umlenkungen herum gelegt sind und wobei zumindest eine der Umlenkungen eine der Transporteinheit zugeordnete Antriebwelle bildet. Solche Transporteinheiten eigenen sich besonders gut zum Transport von Lebensmittelpor-tionen undwerden in der Branche als Bandkassetten bezeichnet.

Die Umlenkungen können als passive, vorzugsweise mitdrehende Umlenkrolle oder als aktive Antriebswelle ausgebildet sein. Gemäß einer besonders einfach herzustellenden Variante umfasst die Transporteinheit genau eine passive Umlenkung und eine aktive Umlenkung.

Um die Transporteinheit auf einfache Weise in ihre Einzelteile zerlegen zu können, beispielsweise um die Transporteinheit gut reinigen zu können, ist es vorteilhaft, wenn die Umlenkungen jeweils von außen, d.h. in Förderrichtung bzw. gegen die Förderrichtung, auf einen Rahmen aufsteckbar sind und lediglich durch die Endlosförderelemente im Rahmen gehalten werden.

Der Rahmen kann durch ein Blech gebildet sein, welches an seinen Längsseiten jeweils abgekantet ist. Die Umlenkungen können zwischen den abgekanteten Abschnitten eingespannt sein. Hierzu können Schlitze in den Endbereichen der abgekanteten Abschnitte ausgeformt sein, in die Abschnitte der Umlenkungen vorzugsweise in Form von starren Achsen in Förderrichtung bzw. gegen die Förderrichtung einschiebbar sind.

Ein weiterer unabhängiger Aspekt der Erfindung betrifft ein System mit mehreren im Wesentlichen nebeneinander quer zu der Transportrichtung angeordneten Wägezellen und mehreren jeweils eine Spur bildenden Transporteinheiten, wobei die Transporteinheiten jeweils mit zumindest einer der Wägezellen mittelbar oder unmittelbar mechanisch verbindbar sind, um ein auf der jeweiligen Transporteinheit liegendes Objekt zu wiegen, und wobei eine Steuerungseinrichtung vorgesehen ist, welche dazu ausgebildet und eingerichtet ist, bei mehrspurigem Betrieb einen Versatz in Transportrichtung zwischen Objekten auf den verschiedenen Spuren zu ermitteln. In anderen Worten ist eine mehrspurige Wägevorrichtung mit Transporteinheiten vorgesehen, mittels der es möglich ist, einen Versatz zwischen Objekten zu erkennen. Eine Detektion eines Versatzes zwischen Portionen ist somit in die Wägevorrichtung integriert.

Alternativ dazu kann die Detektion des Versatzes zwischen Portionen von einer anderen Einheit übernommen werden, der Ausgleich des Versatzes aber von dem System übernommen werden.

Gemäß einem Aspekt ist die Steuerungseinrichtung dazu ausgebildet und eingerichtet, zumindest einen Antrieb so anzusteuern, dass der Versatz verringert oder beseitigt wird. In anderen Worten weist die Wägevorrichtung eine Gruppierbandfunktion auf. Dies hat den Vorteil, dass kein separates Gruppierband mehr benötigt wird und somit die Förderstrecke kürzer gebaut werden kann.

Vorzugsweise ist für jede der Transporteinheiten ein separater Antrieb bzw. Antriebsmotor vorgesehen und die Steuerungseinrichtung dazu ausgebildet und eingerichtet, zumindest einen Bruchteil der Antriebsmotoren der Transporteinheiten so anzusteuern, dass der Versatz verringert oder beseitigt wird. Hierdurch ist ein Gruppieren mehrerer Portionen auf besonders effektive Art möglich.

Gemäß einem Aspekt sind die Wägezellen mit der Steuerungseinrichtung verbunden. Zudem kann die Steuerungseinrichtung dazu ausgebildet und eingerichtet sein, einen Versatz von auf den unterschiedlichen Transporteinheiten befindlichen Objekten anhand von den Wägezellen übermittelten Signalen zu ermitteln. Es wird somit das von der Wägevorrichtung ermittelte Gewichtssignal dazu verwendet, um einen Versatz zwischen Portionen auf verschiedenen Spuren zu ermitteln. Hierdurch können ansonsten benötigte optische Sensoren entfallen. Alternativ kann der Versatz durch optische Sensoren ermittelt werden, beispielsweise durch eine Lichtschranke oder eine Kamera.

Gemäß einem Aspekt wird ein Objektanfang überwacht. In anderen Worten wird ermittelt, wo sich eine Vorderkante eines Objekts relativ zu einer anderen Vorder- kante eines parallelen Objekts befindet. Vorzugsweise wird der Zeitpunkt ermittelt, an dem sich das von der jeweiligen Wägezelle gemessene Gewicht ändert, d.h. einen Wert größer Null anzeigt, und somit die jeweilige Portion die Wägevorrichtung erstmalig beaufschlagt.

Vorzugsweise sind die Wägezellen dazu ausgebildet und eingerichtet, kontinuierlich eine auf die Wägezelle wirkende Gewichtskraft zu messen, sodass daraus der Versatz bestimmbar ist. Die Wägezellen messen somit nicht nur das Gewicht der Portionen, sondern auch die Zeitpunkte, an denen die jeweiligen Portionen erstmalig die Oberfläche der jeweiligen Wägetische berühren.

Gemäß einem weiteren separaten Aspekt der Erfindung umfasst das System einen Standfuß und eine Mehrzahl von unterschiedlichen Adapterplatten, welche jeweils dazu ausgebildet und eingerichtet sind, mit dem Standfuß einerseits und einer vorbestimmten Anzahl von Wägezellen andererseits gekoppelt zu werden. Die Adapterplatte macht es möglich, ein und denselben Standfuß mit einer unterschiedlichen Anzahl von Wägezellen zu bestücken. Daher muss der in der Regel immobile Standfuß nicht ausgetauscht werden, um die Wägevorrichtung hinsichtlich ihrer Anzahl und/oder Breite ihrer Spuren zu verändern.

Gemäß einem Aspekt der Erfindung ist der Standfuß als geschlossenes Gehäuse ausgebildet. Um das Gehäuse vor einem Eindringen von Verunreinigungen zu schützen, kann zwischen der Adapterplatte und dem Gehäuse eine umlaufende Dichtung angeordnet sein.

Vorzugsweise ist die Adapterplatte mittels Schrauben an dem Gehäuse befestigt.

Diese Schrauben können entsprechend den Verordnungen für Produktionsmaschinen im Lebensmittelbereich geformt sein, sodass diese auf einfache Art und Weise gereinigt werden können. Zudem ist es vorteilhaft, wenn eine Dichtung zwischen Schraubenkopf und Adapterplatte angeordnet ist, um die Öffnung für die Schraube entsprechend abzudichten.

Gemäß einem vorteilhaften Aspekt ist jede der Wägezellen mit einer Transporteinheit koppelbar, die eine Auflageebene für ein zu wiegendes Objekt definiert. Die Transporteinheit kann gemäß einem oder mehreren der vorstehend oder nachfolgend beschriebenen Aspekte ausgebildet sein.

Gemäß einem weiteren unabhängigen Aspekt der Erfindung weist das System einen Standfuß mit einer Kavität auf, wobei die Kavität im Gebrauch zumindest teilweise mit einem dämpfenden Material, insbesondere Zirkonsand, befüllt ist. Ein solcher mit Sand befüllter Standfuß dämpft Schwingungen, welche beispielsweise durch andere Fertigungsmaschinen erzeugt werden und über den Boden auf das System übertragen werden. Ein solcher, mit dämpfendem Material befüllter Stand- fuß ist besonders bei Wägevorrichtungen vorteilhaft, da mechanische Erschütterungen des Bodens das Ergebnis des Wiegens verfälschen können.

Vorzugsweise befindet sich die Sandfüllungen in einem unteren Bereich des Standfußes. In diesem Fall kann in einem oberen Bereich des Standfußes die elektrotechnische Ausstattung der Wägevorrichtung angeordnet sein.

Gemäß einem weiteren unabhängigen Aspekt betrifft die Erfindung ein Verfahren zum Umrüsten eines Systems zum Fördern von Objekten entlang einer Transportrichtung umfassend:
- Bereitstellen einer Basis mit mehreren im Wesentlichen nebeneinander quer zu der Transportrichtung angeordneten mechanischen Schnittstellen, und mehreren jeweils genau eine Spur unterschiedlicher Breite bildenden Transporteinheiten, wobei jede der Transporteinheiten eine zu den Schnittstellen der Basis korrespondierende mechanische Schnittstelle aufweist,
- Ermitteln zumindest einer geeigneten Transporteinheit aus der Mehrzahl von bereitgestellten unterschiedlich breiten Transporteinheiten anhand einer Breite eines zu transportierenden Objekts,
- Koppeln der ermittelten Transporteinheit mit der Basis über die Schnittstellen, sodass die Transporteinheit von der Basis gehalten ist.

Vorzugsweise wird das Koppeln der ermittelten Transporteinheit ohne Werkzeug durchgeführt. Hierdurch kann das Koppeln der Transporteinheit schneller und hygienischer durchgeführt werden. Vorteilhafterweise umfasst das Koppeln der Transporteinheit lediglich ein Verrasten der Transporteinheit mit der Basis. Die hierzu benötigten Schnittstellen können gemäß einem oder mehreren derzuvor oder nachfolgend genannten Aspekte ausgebildet sein.

Vorzugsweise ist das verwendete System zur Durchführung der beschriebenen Verfahren gemäß einem oder mehreren der zuvor oder nachfolgend genannten Aspekte ausgebildet.

Gemäß einem weiteren unabhängigen Aspekt betrifft die Erfindung ein Verfahren zum Umrüsten einer Wägevorrichtung. In diesem Fall umfasst das Verfahren ein
- Bereitstellen einer Wägevorrichtung mit mehreren im Wesentlichen nebeneinander quer zu der Transportrichtung angeordneten Wägezellen, und mehreren jeweils genau eine Spur unterschiedlicher Breite bildenden Transporteinheiten, wobei jede der Wägezellen eine Halterung trägt, die zumindest eine mechanische Schnittstelle aufweist, und wobei jede der Transporteinheiten eine korrespondierende mechanische Schnittstelle aufweist,
- Ermitteln zumindest einer geeigneten Transporteinheit aus der Mehrzahl von bereitgestellten unterschiedlich breiten Transporteinheiten anhand einer Breite eines zu wiegenden Objekts,
- Koppeln der ermittelten Transporteinheit mit zumindest einer entsprechenden Halterung über die Schnittstellen, sodass die Transporteinheit mit der zumindest einen Wägezelle mechanisch verbunden ist, um ein auf der Transporteinheit liegendes Objekt zu wiegen.

Die Wägevorrichtung wird in anderen Worten mit Transporteinheiten unterschiedlicher Breite gekoppelt, um die Wägevorrichtung auf eine Breite eines zu wiegenden Produktes anzupassen. Dabei kann auch hier das Koppeln der ermittelten Transporteinheit ohne Werkzeug durchgeführt werden.

Das zu fördernde und/oder zu wiegende Objekt kann eine Portion eines Lebensmittelprodukts umfassen. Eine solche Portion besteht aus wenigstens einer Scheibe, wobei die Scheibe in einer Aufschneidemaschine von einem Lebensmittelprodukt abgetrennt wurde.

Gemäß einem Aspekt der zuvor beschriebenen Verfahren umfassen diese Verfahren ein Entfernen der ermittelten Transporteinheit von der zumindest einen Halterung. Das Entfernen der Transporteinheit kann ohne Werkzeug durchgeführt werden.

Gemäß einem weiteren unabhängigen Aspekt betrifft die Erfindung ein Verfahren zum Gruppieren von mehreren auf parallelen Spuren platzierten Objekten, umfassend
- Bereitstellen einer Wägevorrichtung mit mehreren im Wesentlichen nebeneinander quer zu der Transportrichtung angeordneten Wägezellen, wobei zumindest eine erste Wägezelle von einer eine erste Spur bildenden ersten Transporteinrichtung beaufschlagt ist und eine zweite Wägezelle von einer eine zweite Spur bildenden zweiten Transporteinrichtung beaufschlagt ist, um ein auf der jeweiligen Transporteinheit liegendes Objekt zu wiegen,
- Aufbringen von mindestens einem ersten Objekt auf der ersten Transporteinheit und einem zweiten Objekt auf der zweiten Transporteinheit,
- Ermitteln eines Versatzes in Transportrichtung zwischen dem ersten und zweiten Objekt, insbesondere durch Messen eines zeitlichen Versatzes von gemessenen Gewichtskräften durch die erste und zweite Wägezelle,
- Ausgleichen des Versatzes, insbesondere durch unterschiedliches Antreiben der die verschiedenen Spuren bildenden ersten und zweiten Transporteinheit der Wägevorrichtung.

Die Wägevorrichtung wird somit dazu verwendet, auf unterschiedlichen Spuren angeordnete Objekte bzw. Portionen zu gruppieren, d.h. einen etwaigen Versatz zu eliminieren. Dabei wird das Ausgleichen des Versatzes vorzugsweise dadurch erzielt, dass jede der Transporteinheiten einen separaten Antrieb aufweist und eine Steuerungseinrichtung diese Antriebe so ansteuert, dass der Versatz der Objekte bzw. Portionen beim Abtransport der Portionen durch die Transporteinheiten ausgeglichen wird.

Gemäß einem vorteilhaften Aspekt ist das System hygienesensitiv ausgestaltet. Es erfüllt somit Anforderungen, die zur Verarbeitung von Lebensmitteln notwendig sind.

Die zuvor und nachstehend beschriebenen Aspekte - auch die unabhängigen Aspekte - bilden in Kombination mit jedem anderen Aspekt erfindungsgemäße Gegenstände.

Nachfolgend wird die Erfindung anhand einer rein beispielhaften Ausführungsform unter Bezugnahme auf die beigefügten Zeichnungen beschrieben. Es zeigen:
- Fig. 1: eine perspektivische Ansicht eines erfindungsgemäßen Systems;
- Fig. 2A: eine Seitenansicht des Systems von Fig. 1 in gekoppeltem Zustand, wobei einige Komponenten zum besseren Verständnis teiltransparent dargestellt sind;
- Fig. 2B: eine Seitenansicht des Systems von Fig. 1 in entrastetem Zustand, wobei auch hier einige Komponenten zum besseren Verständnis teiltransparent dargestellt sind;
- Fig. 2C: eine Seitenansicht des Systems von Fig. 1 in vollständig entkoppeltem Zustand, wobei auch hier einige Komponenten zum besseren Verständnis teiltransparent dargestellt sind;
- Fig. 3A: eine perspektivische Darstellung des Systems von Fig. 1, auf dem vier schmale Transporteinheiten angebracht sind,
- Fig. 3B: eine perspektivische Darstellung des Systems von Fig. 1, bei dem eine der Transporteinheiten abgenommen wurde,
- Fig. 3C: eine perspektivische Darstellung des Systems von Fig. 1, bei dem alle vier Transporteinheiten abgenommen wurden,
- Fig. 3D: eine perspektivische Darstellung des Systems von Fig. 1, bei dem eine erste breite Transporteinheit angebracht wurde,
- Fig. 3E: eine perspektivische Darstellung des Systems von Fig. 1, bei dem auch die zweite breite Transporteinheit angebracht wurde,
- Fig. 4A: eine erste Draufsicht auf das System von Fig. 1 und einem vorgelagerten Förderband, und
- Fig. 4B: eine zweite Draufsicht auf das System von Fig. 1, bei dem ein Versatz zwischen Objekten eliminiert wurde.

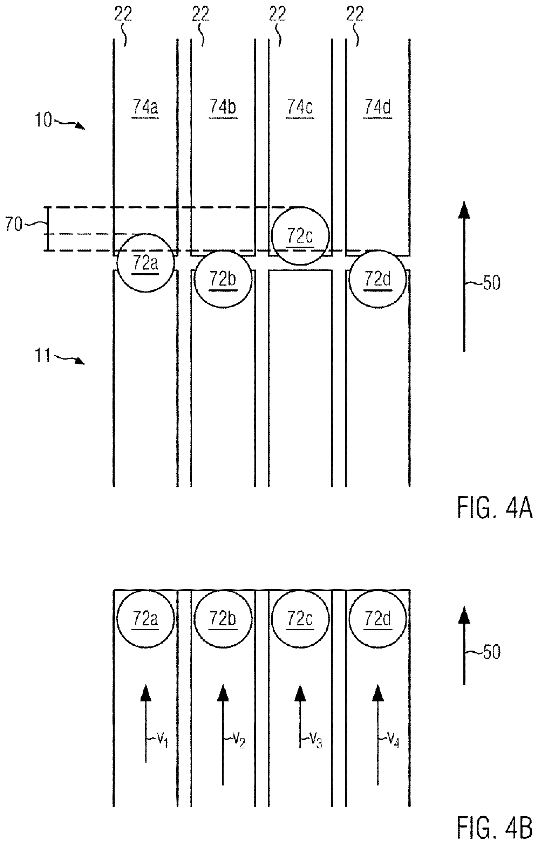

In den Figuren ist ein System 10 zum parallelen Wiegen von mehreren Portionen 72 eines Lebensmittelprodukts gezeigt. Solche Portionen 72 entstehen, indem Lebensmittelprodukte mehrspurig von einem Slicer zu Scheiben aufgeschnitten werden und anschließend aus den Scheiben auf einem Portionierband Portionen 72 gebildet werden. Um die einzelnen Portionen 72 "in-line", d.h. in einer dem Slicer nachgeordneten Produktionslinie, zu wiegen, werden die Portionen 72 von einer in Fig. 4A gezeigten Fördereinrichtung 11, beispielsweise dem Portionier- band, auf das in den Figuren gezeigte System, welches als Wägevorrichtung ausgebildet ist, übergeben. Anschließend werden die Portionen von der Wägevorrichtung auf ein weiteres, nicht gezeigtes, Förderband abgegeben. Dabei dient die Wägung insbesondere zur Portionskontrolle und somit dem gewichtsgenauen Aufschneiden. Vorzugsweise fließen die Messwerte in die Regelung bzw. Steuerung des Slicers ein.

Das System 10 umfasst eine Basis 12 mit einem Standfuß 14, welcher nach einem erstmaligen Aufbau der Wägevorrichtung an Ort und Stelle verbleibt und somit bei einem Umbau der Wägevorrichtung nicht ausgetauscht wird. Der Standfuß 14 ist mit einer Adapterplatte 16 gekoppelt. Diese Adapterplatte 16 hält wiederum mehrere Wägezellen 18, welche jeweils eine Halterung 20 tragen. Zudem umfasst das System 10 mehrere unterschiedlich breite Transporteinheiten 22a, 22b, die jeweils auf die Halterungen 20 auflegbar sind, um das System 10 mit Transporteinheiten 22 unterschiedlicher Breite betreiben zu können. Um die Halterungen 20 mit den Transporteinheiten 22 zu verbinden, weisen die Halterungen 20 jeweils eine Schnittstelle 24 auf, welche es in Verbindung mit einer korrespondierenden Schnittstelle 26 der Transporteinheit 22 erlaubt, die Transporteinheiten 22 auf den Halterungen 20 zu befestigen.

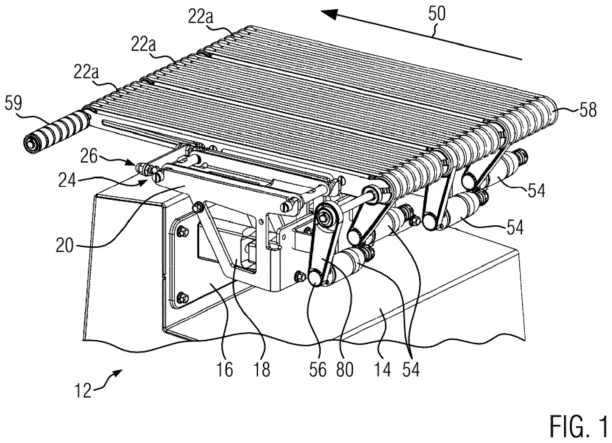

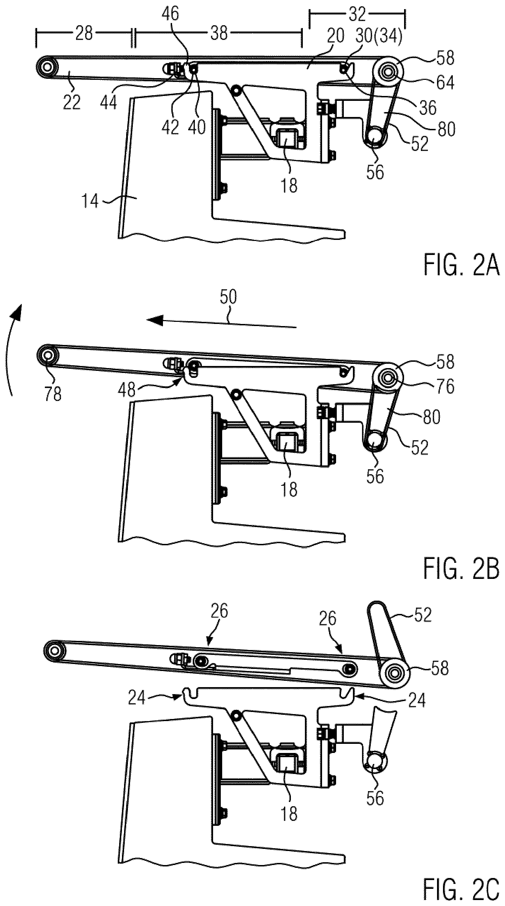

In den Figuren 2A bis 2C ist gezeigt, wie die Transporteinheiten 22 von ihrer jeweiligen Halterung 20 abgenommen werden können. Um die Transporteinheiten 22 abzunehmen, muss lediglich ein auslaufseitiger Bereich 28 der Transporteinheit 22 angehoben werden. Hierdurch ist die Transporteinheit 22 um eine durch die Schnittstelle 26 der Transporteinheit 22 gebildete Schwenkachse 30 verschwenkbar, welche in einem einlaufseitigen Bereich 32 der Transporteinheit 22 angeordnet ist. Die Schwenkachse 30 wird durch ein rundstabförmiges Element 34 der Transporteinheit 22 gebildet, welche in zwei eine Nut bildende Ausnehmungen 36 drehbar eingelegt ist. Die Nut erstreckt sich dabei schräg nach oben, um ein ungewünschtes Lösen, beispielsweise durch ein Drücken auf den einlaufseitigen Bereich 32, der Transporteinheit 22 zu erschweren. In einem mittigen Bereich 38der Transporteinheit 22 weist die Transporteinheit 22 ein zweites rundstabförmiges Element 40 auf, welches ebenfalls in zwei eine Nut bildenden Ausnehmungen 42 der Halterung 20 eingelegt ist. Um die Transporteinheit 22 formschlüssig mit der Halterung 20 zu koppeln, weist die Transporteinheit 22 ein Rastelement 44 auf, welches in einem gekoppelten Zustand (siehe Fig. 2A) in eine durch eine Rastnase 46 gebildete Hinterschneidung 48 der Halterung 20 einrastet. Das Rastelement ist durch eine nicht gezeigte Feder vorgespannt und entgegen deren Federkraft von einer Halteposition (siehe Figur 1A) in eine Freigabeposition verstellbar, um die Transporteinheit 22 von der Halterung 20 zu lösen. Im vorliegenden Beispiel ist das Rastelement 44 in einer Transportrichtung 50 bewegbar, indem das Rastelement 44 mit seiner Stirnseite an einer Schrägfläche der Rastnase 46 abgleitet. Sobald ein Hochpunkt der Rastnase 46 überschritten ist, kann sich die Feder des Rastelements 44 wieder entspannen, wodurch das Rastelement 44 entgegen der Transportrichtung 50 in seine Ausgangsposition zurückgleitet.

Um die Transporteinheit 22 nun vollständig von der Halterung 20 abnehmen zu können, muss noch ein Zahnriemen 52, welcher ein von einem jeweiligen Antriebsmotor 54 aufgebrachtes Drehmoment auf die jeweilige Transporteinheit 22 überträgt, abgezogen werden. Der Zahnriemen 52 liegt spannungsfrei, d. h. ohne Zugspannung bei ausgeschaltetem Antriebsmotor 54, an einer Antriebswelle 56 des Antriebsmotors 54 und an einer als Umlenkung 58 ausgebildeten Antriebswelle der Transporteinheit 22 an. Auf der Antriebswelle 56 des Antriebsmotors 54 und der als Umlenkung 58 ausgebildeten Antriebswelle der Transporteinheit 22 sind jeweils nicht gezeigte Verzahnungen ausgebildet, welche mit dem Zahnriemen 52 kämmend in Eingriff stehen. Der Zahnriemen 52 kann durch zwei als Endlosriemen ausgebildete Förderelemente 60 auf der Umlenkung 58 axial fixiert sein. In einer Ausführungsform kann die Antriebswelle in Form der Umlenkung, ausgebildet sein, den Zahnriemen 52 axial in Position zu halten, beispielsweise durch eine Stufe oder Vertiefung. Die Vertiefung kann beispielsweise durch eine Verzahnung der Umlenkung 58 gebildet sein. Damit kann die axiale Verschiebung des Zahnriemens 52 auf der Umlenkung 58 verhindert werden. Die Förderelemente 60 der jeweiligen Transporteinheit 22 bilden gemeinsam eine Auflagefläche 62 für das zu fördernde Produkt, indem sie zwischen der Umlenkung 58 und einer zweiten passiven Umlenkung 59 gespannt sind. Zudem erstreckt sich eine durch ein Blech 61 gebildete Auflageebene fürdie Riemen unterhalb der Riemen. Diese Auflageebene kann eine durchgängige Fläche bilden oder Aussparungen, beispielsweise in Form von Langlöchern, aufweisen. Das Blech 61 ist an seinen Seiten jeweils rechtwinkelig nach unten abgekantet und bildet einen Rahmen, in den die Umlenkungen 58 und 59 eingehängt sind. Hierzu bildet das Blech 61 Schlitze 66, 68 aus, welche sich im Wesentlichen in bzw. entgegen der Transportrichtung 50 erstrecken. In diese Schlitze 66, 68 greifen Rundstäbe 76, 78 (siehe Fig. 2B) ein, mit denen die Umlenkungen 58 und 59 drehbar verbunden sind. Alternativ zu den Rundstäben, können beidseitig Achszapfen in dem Blech angeordnet sein. Auf den Achszapfen sind Lager, insbesondere Wälzlager, angeordnet, um die Umlenkungen 58 und 59 drehbar zu lagern. Zudem kann eine Dichtung axial außen von den Lagern auf den Achszapfen angeordnet sein, um die Lager vor Verschmutzung zu schützen. Die Achszapfen sind einfach demontierbar, und ermöglichen somit eine einfache Demontierbarkeit der Umlenkungen 58 und 59.

Da der Zahnriemen 52 spannungsfrei um die Antriebswelle 56 des Antriebsmotors 54 und die Antriebswelle 58 der Transporteinheit 22 gelegt ist, kann der Zahnriemen 52 von der Antriebswelle 56 des Antriebsmotors 54 gelöst werden, bevor die Transporteinheit 22 von der Halterung 20 gelöst wird. Es ist auch nicht notwendig, irgendwelche Hebel zu betätigen, um den Zahnriemen 52 zunächst zu entspannen. Zudem kann die Transporteinheit 22 zuerst von der Halterung 20 gelöst werden und anschließend der Zahnriemen 52 von der Antriebswelle 56 des Antriebsmotors 54. Der Zahnriemen 52 kann daher auf besonders einfache Art und Weise entkoppelt werden. Ein weiterer Vorteil des spannungslosen Zahnriemens 52 ist, dass eine Lagerung 64 der Umlenkung 58 weniger stark belastet wird und deshalb dort günstigere Lager verwendet werden können.

Um ein Eingreifen von Bedienungspersonal in den angetriebenen Zahnriemen 52 zu vermeiden, ist ein Eingreifschutz 80 in einem Innenraum des Zahnriemens 52 angeordnet. Der Eingreifschutz 80 bildet einen Teil der Halterung 20.

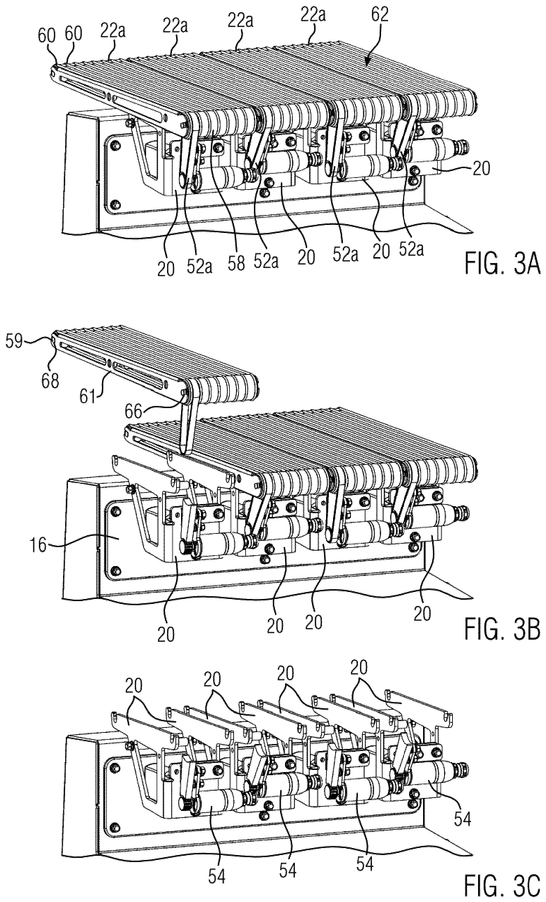

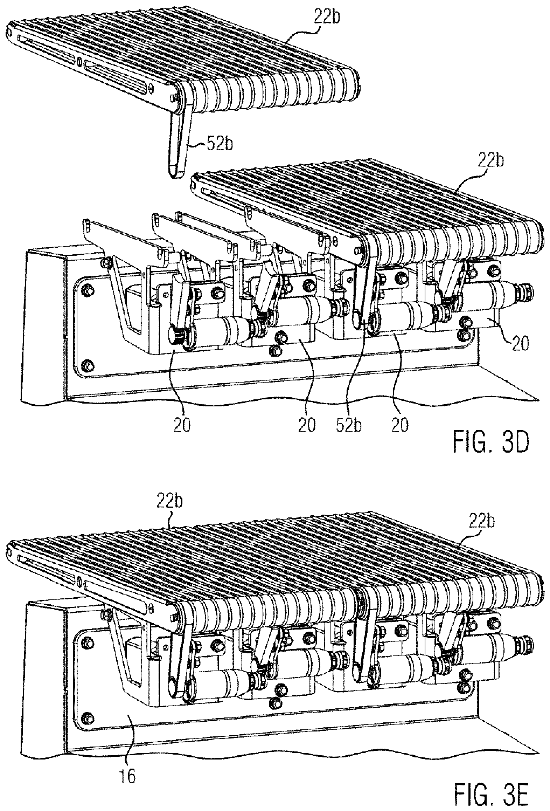

In Bezug auf die Figuren 3A bis 3E wird im Folgenden nun beschrieben, wie das System 10 von einer vierspurigen Wägevorrichtung auf eine zweispurige Wägevorrichtung mit doppelt so breiten Spuren umgebaut werden kann. Dieser Umbau dient lediglich als Beispiel. Es ist mit dem gezeigten System 10 in gleicher Weise möglich, die vierspurige Wägevorrichtung durch Austausch der Transporteinheiten 22 in beispielsweise eine dreispurige Wägevorrichtung mit zwei schmalen und einer breiten Spur umzubauen. In einer Ausführungsform kann die Halterung 20 asymmetrisch in Transversalrichtung angeordnet sein. Dies ermöglicht eine Veränderung der Anzahl der Spuren bei gleichbleibenden Spurbreiten. Bei einer Reduzierung der Spuranzahl können mehrere Wägezellen einer Transporteinheit zugeordnet werden, oder Wägezellen unbenutzt verbleiben. So kann das gezeigte System 10, wenn asymmetrische Halterungen vorgesehen sind, von der vierspurigen Wägevorrichtung in eine dreispurige Wägevorrichtung mit drei gleichgroßen Spurenumgebaut werden. Zudem könnte eine dreispurige Wägevorrichtung zu einer zweispurigen Wägevorrichtung umgebaut werden, wobei die vormalige mittlere Wägezelle hierbei entweder nicht oder zwei Wägezellen für die erste Spur und eine Wägezelle für die zweite Spur verwendet werden. Weiterhin ist auch der Umbau des gezeigten Systems 10 von einer zweispurigen Wägevorrichtung auf eine einspurige Wägevorrichtung möglich, wobei beide Wägezellen verwendet werden oder nur eine Wägezelle verwendet wird.

In Figur 3A ist das System 10 mit vier schmalen Transporteinheiten 22a bestückt. Wird nun entschieden, dass als nächstes breitere Produkte verarbeitet werden sollen, werden zunächst die schmalen Transporteinheiten 22a von ihren jeweiligen Halterungen 20 abgenommen und dabei auch die Zahnriemen 52a von der jeweiligen Antriebswelle 56 abgezogen (siehe Figur 3B). Wenn alle vier Transporteinheiten 22a von ihren Halterungen 20 abgenommen sind (siehe Figur 3C), werden diese durch bereitgestellte breitere Transporteinheiten 22b ersetzt. Diese breiteren Transporteinheiten 22b werden nun jeweils auf zwei der Halterungen 20 aufgelegt und mit jeder dieser Halterungen 20 verrastet. Zudem wird ein Zahnriemen 52b der breiteren Transporteinheit 22b mit einer der Antriebswellen 56 gekoppelt. Die breitere Transporteinheit 22b ist im Wesentlichen wie die schmalere Transporteinheit 22a aufgebaut, jedoch sind die Umlenkungen 58, 59 ungefähr doppelt solang ausgebildet und die Transporteinheit 22b weist ungefähr doppelt so viele Riemen auf, wie die Transporteinheit 22a. Die Transporteinheiten 22b sind jeweils mit einem Antriebsmotor 54 einer der beaufschlagten Halterungen 20 gekoppelt, während der zweite Antriebsmotor 54 der zweiten beaufschlagten Halterung 20 nicht mit der Transporteinheit 22b gekoppelt ist.

Um die Wägevorrichtung mit der in Figur 3E gezeigten Konfiguration verwenden zu können, kann in eine Steuerungseinrichtung eingegeben werden, welche Halterungen 20 mit welcher Größe von Transporteinheit 22 verwendet werden. Für die in Figur 3E gezeigte Konfiguration müsste somit eingegeben werden, dass die Halterungen eins und zwei von einer gemeinsamen Transporteinheit 22b beaufschlagt werden sowie analog dazu die Halterungen drei und vier ebenfalls von einer gemeinsamen Transporteinheit 22b beaufschlagt werden. Dagegen müsste die Steuerungseinrichtung bei der in Figur 3A gezeigten Konfigurationen so eingestellt werden, dass alle vier Halterungen 20 jeweils von einer separaten Transporteinheit 22a beaufschlagt werden. Um diese Einstellung zu automatisieren, können an den Transporteinheiten 22a und 22b nicht gezeigte Codierungen vorgesehen sein, welche der Steuerungseinrichtung diese Informationen zur Verfügung stellen.

Zudem besteht bei diesem System 10 die Möglichkeit, eine Konfiguration mit drei gleich breiten Transporteinheiten 22 zu wählen. Hierzu wird die Adapterplatte 16 abgeschraubt und eine nicht gezeigte andere Adapterplatte anstelle der Adapterplatte 16 angeschraubt. Diese andere Adapterplatte weist anstelle der vier Befestigungsmöglichkeiten für Wägezellen 18 lediglich drei Befestigungsmöglichkeiten für Wägezellen 18 auf, welche in einem anderen Abstand zueinander angeordnet sind. Diese drei Wägezellen 18 können dann jeweils mit einer Halterung 20 versehen werden, welche es erlaubt, jede der drei Wägezellen 18 mit einer entsprechenden Transporteinheit 22 zu koppeln.

Hierdurch muss bei keiner der beschriebenen Umbauten eine Veränderung an dem Standfuß 14 vorgenommen werden. Vielmehr ist es möglich, dass der Stand- fuß 14 stets an Ort und Stelle verbleibt. Da der Standfuß 14 nicht mobil ausgestaltet werden muss, kann dieser zumindest teilweise mit einem schweren, dämpfenden Material befüllt werden. Hierzu eignet sich Zirkonsand, welcher mechanische Schwingungen des Bodens besonders gut dämpft. Durch die Dämpfung der vom Boden auf die Wägevorrichtung übertragenen Schwingung kann die Wägevorrichtung noch präzisere Messergebnisse liefern.

Ferner weist die gezeigte Wägevorrichtung eine Gruppierbandfunktion auf, welche nun in Bezug auf die Figuren 4A und 4B beschrieben wird. Mittels der Gruppierbandfunktion ist die Wägevorrichtung in der Lage, einen ermittelten Versatz 70 zwischen Portionen 72 auf den einzelnen Spuren 74a bis 74d auszugleichen. Hierzu ermittelt die Wägevorrichtung bei jeder einzelnen Spur 74a bis 74d, wann die jeweilige Portion 72a bis 72d an die jeweiligen Transporteinheiten 22 übergeben wird. Werden die Portionen 72a bis 72d nicht gleichzeitig an die jeweiligen Transporteinheiten 22 übergeben, messen die jeweiligen Wägezellen 18 zu unterschiedlichen Zeiten einen Gewichtsanstieg. Durch Zeitdifferenzen von jeweiligen Gewichtszunahmen kann also der jeweilige Versatz 70 der Portionen 72 berechnet werden. Die Steuerungseinrichtung ist so ausgebildet und eingerichtet, dass sie bei Detektion eines Versatzes 70 die verschiedenen Transporteinheiten 22, d.h. deren Antriebsmotoren 54, unterschiedlich antreibt, sodass der Versatz 70 eliminiert wird. Beispielsweise können die Antriebsmotoren 54, wie in Fig. 4B dargestellt, mit unterschiedlichen Geschwindigkeiten v1 bis v4 angetrieben werden, um den Versatz 70 auszugleichen und so gruppierte Portionen zu erhalten.

### Bezugszeichenliste

- 10: System
- 11: Fördereinrichtung
- 12: Basis
- 14: Standfuß
- 16: Adapterplatte
- 18: Wägezellen
- 20: Halterung
- 22: Transporteinheit
- 22a: schmale Transporteinheit
- 22b: breite Transporteinheit
- 24: Schnittstelle
- 26: Schnittstelle
- 28: auslaufseitiger Bereich
- 30: Schwenkachse
- 32: einlaufseitiger Bereich
- 34: stabförmiges Element
- 36: Ausnehmung
- 38: mittiger Bereich
- 40: stabförmiges Element
- 42: Ausnehmung
- 44: Rastelement
- 46: Rastnase
- 48: Hinterschneidung
- 50: Transportrichtung
- 52: Zahnriemen
- 54: Antriebsmotor
- 56: Antriebswelle
- 58: Umlenkung
- 59: Umlenkung
- 60: Förderelemente
- 61: Blech
- 62: Auflagefläche
- 64: Lagerung
- 66: Schlitz
- 68: Schlitz
- 70: Versatz
- 72: Portionen
- 74a: Spur
- 74b: Spur
- 74c: Spur
- 74d: Spur
- 76: Rundstab
- 78: Rundstab
- 80: Eingreifschutz

## Patentansprüche

1. System (10) zum Fördern von Objekten (72) entlang einer Transportrichtung (50), mit einer Basis (12), welche mehrere im Wesentlichen nebeneinander quer zu der Transportrichtung (50) angeordnete mechanische Schnittstellen (24) bildet, und mehreren jeweils genau eine Spur bildenden Transporteinheiten (22), wobei jede der Transporteinheiten (22) eine zu zumindest einer der mechanischen Schnittstellen (24) der Basis (12) korrespondierende mechanische Schnittstelle (26) aufweist, die derart ausgebildet ist, dass die Transporteinheiten (22) mit der Basis (12) mechanisch verbindbar sind und die Transporteinheiten (22) jeweils getrennt voneinander von der Basis (12) vollständig abnehmbar sind, **dadurch gekennzeichnet dass**, die Transporteinheiten (22) zumindest in zwei unterschiedlichen Breiten, d.h. in einer schmaleren Variante (22a) und einer breiteren Variante (22b), bereitgestellt sind und zumindest eine der mechanischen Schnittstellen (24) der Basis (12) dazu ausgebildet und eingerichtet ist, wechselweise mit einer korrespondierenden mechanischen Schnittstelle (26) der schmaleren Variante (22a) oder einer korrespondierenden mechanischen Schnittstelle (26) der breiteren Variante (22b) verbunden zu werden, sodass das System (10) hinsichtlich der Anzahl und/oder Breite der Spuren veränderbar ist.

2. System (10) nach Anspruch 1 zum Wiegen von entlang einer Transportrichtung (50) geförderten Objekten (72), wobei die Basis (12) mehrere im Wesentlichen nebeneinander quer zu der Transportrichtung angeordnete Wägezellen (18) umfasst, wobei jede der Wägezellen (18) eine Halterung (20) trägt, die eine der mechanischen Schnittstellen (24) der Basis (12) bildet, sodass die Transporteinheiten (22) jeweils mit zumindest einer der Halterungen (20) mechanisch verbindbar sind, um ein auf der jeweiligen Transporteinheit (22) liegendes Objekt (72) zu wiegen.

3. System (10) nach Anspruch 1 oder 2, wobei die Schnittstellen (24, 26) derart ausgebildet sind, dass die Transporteinheiten (22) werkzeuglos, und insbesondere einhändig, austauschbar sind.

4. System (10) nach zumindest einem der vorherigen Ansprüche, wobei die breitere Variante (22b) der Transporteinheiten (22) zumindest zwei Schnittstellen (24) der Basis (12), insbesondere zwei Wägezellen (18), überspannt.

5. System (10) nach Anspruch 4, wobei die breitere Variante (22b) der Transporteinheiten (22) zumindest zwei Schnittstellen (26) aufweist, um mit zumindest zwei der Schnittstellen (24) der Basis (12) verbunden zu werden, insbesondere wobei die breitere Variante (22b) der Transporteinheiten (22) mit mehreren Halterungen (20) verbindbar ist, um im Betrieb mehrere oder alle überspannten Wägezellen (18) zu beaufschlagen.

6. System (10) nach zumindest einem der vorherigen Ansprüche 2 bis 5, wobei das System (10) zumindest eine Transporteinheit (22) umfasst, die eine Codierung aufweist, durch die das System (10) automatisch erkennt, mit wie vielen und/oder welchen Wägezellen (18) die Transporteinheit verbunden ist.

7. System (10) nach zumindest einem der vorherigen Ansprüche, wobei jede der angebrachten Transporteinheiten (22) separat antreibbar ist, insbesondere wobei jeder der Transporteinheiten (22) ein separater Antriebsmotor (54) zugeordnet ist.

8. System (10) nach einem der vorherigen Ansprüche, mit mehreren im Wesentlichen nebeneinander quer zu der Transportrichtung (50) angeordneten Wägezellen (18), wobei jede der Wägezellen (18) eine Halterung (20) trägt, die zumindest eine der mechanischen Schnittstellen (24) aufweist, sodass die Transporteinheiten (22) jeweils mit zumindest einer der Halterungen (20) mechanisch verbindbar sind, um ein auf der jeweiligen Transporteinheit (22) liegendes Objekt zu wiegen und sodass die Transporteinheiten (22) jeweils von der zugeordneten Halterung (20) vollständig abnehmbar sind.

9. System (10) nach zumindest einem der vorherigen Ansprüche, mit mehreren im Wesentlichen nebeneinander quer zu der Transportrichtung (50) angeordneten Wägezellen (18), wobei die Transporteinheiten (22) jeweils mit zumindest einer der Wägezellen (18) mittelbar oder unmittelbar mechanisch verbindbar sind, um ein auf der jeweiligen Transporteinheit (22) liegendes Objekt (72) zu wiegen, und wobei eine Steuerungseinrichtung vorgesehen ist, welche dazu ausgebildet und eingerichtet ist, bei mehrspurigem Betrieb einen Versatz (70) in Transportrichtung (50) zwischen Objekten (72) auf den verschiedenen Spuren zu ermitteln.

10. System (10) nach Anspruch 9, wobei die Steuerungseinrichtung dazu ausgebildet und eingerichtet ist, zumindest einen Antrieb (54) so anzusteuern, dass der Versatz (70) verringert oder beseitigt wird.

11. System (10) nach Anspruch 9 oder 10, wobei die Wägezellen (18) mit der Steuerungseinrichtung verbunden sind, und die Steuerungseinrichtung dazu ausgebildet und eingerichtet ist, einen Versatz (70) von auf den unterschiedlichen Transporteinheiten (22) befindlichen Objekten (72) anhand von den Wägezellen (18) übermittelten Signalen zu ermitteln.

12. System (10) nach Anspruch 13, wobei die Wägezellen (18) dazu ausgebildet und eingerichtet sind, kontinuierlich eine auf die Wägezelle (18) wirkende Gewichtskraft zu messen, sodass daraus der Versatz (70) bestimmbar ist.

13. Verfahren zum Umrüsten eines Systems (10) zum Fördern von Objekten (72) entlang einer Transportrichtung (50), insbesondere nach einem der vorherigen Ansprüche, umfassend:
- Bereitstellen einer Basis (12) mit mehreren im Wesentlichen nebeneinander quer zu der Transportrichtung (50) angeordneten mechanischen Schnittstellen (24), und mehreren jeweils genau eine Spur unterschiedlicher Breite bildenden Transporteinheiten (22a, 22b), wobei jede der Transporteinheiten (22a, 22b) eine zu den Schnittstellen (24) der Basis (12) korrespondierende mechanische Schnittstelle (26) aufweist,
- Ermitteln zumindest einer geeigneten Transporteinheit (22b) aus der Mehrzahl von bereitgestellten unterschiedlich breiten Transporteinheiten (22a, 22b) anhand einer Breite eines zu transportierenden Objekts (72),
- Koppeln der ermittelten Transporteinheit (22b) mit der Basis (12) über die Schnittstellen (24, 26), sodass die Transporteinheit (22b) von der Basis (12) gehalten ist, insbesondere wobei das Koppeln der ermittelten Transporteinheit (22b) ohne Werkzeug durchgeführt wird.

14. Verfahren nach Anspruch 13,
- Bereitstellen einer Wägevorrichtung mit mehreren im Wesentlichen nebeneinander quer zu der Transportrichtung (50) angeordneten Wägezellen (18), wobei jede der Wägezellen (18) eine Halterung (20) trägt, die zumindest eine der mechanischen Schnittstellen (24) aufweist,
- Koppeln der ermittelten Transporteinheit (22b) mit zumindest einer der entsprechenden Halterungen (20) über die Schnittstellen (24, 26), sodass die Transporteinheit (22b) mit zumindest einer der Wägezellen (18) mechanisch verbunden ist, um ein auf der Transporteinheit (22b) liegendes Objekt zu wiegen, insbesondere wobei das Koppeln der ermittelten Transporteinheit (22b) ohne Werkzeug durchgeführt wird.

15. Verfahren nach Anspruch 13, umfassend
- Bereitstellen einer Wägevorrichtung mit mehreren im Wesentlichen nebeneinander quer zu der Transportrichtung (50) angeordneten Wägezellen (18), wobei zumindest eine erste Wägezelle (18) von einer eine erste Spur (74a) bildenden ersten Transporteinrichtung (22) beaufschlagt ist und eine zweite Wägezelle (18) von einer eine zweite Spur (74b) bildenden zweiten Transporteinrichtung (22) beaufschlagt ist, um ein auf der jeweiligen Transporteinheit (22) liegendes Objekt zu wiegen,
- Aufbringen von mindestens einem ersten Objekt (72a) auf der ersten Transporteinheit (22) und einem zweiten Objekt (72b) auf der zweiten Transporteinheit (22),
- Ermitteln eines Versatzes (70) in Transportrichtung (50) zwischen dem ersten Objekt (72a) und dem zweiten Objekt (72b), insbesondere durch Messen eines zeitlichen Versatzes von gemessenen Gewichtskräften durch die erste und zweite Wägezelle (18),
- Ausgleichen des Versatzes (70), insbesondere durch unterschiedliches Antreiben der die verschiedenen Spuren (74a, 74b) bildenden ersten und zweiten Transporteinheit (22) der Wägevorrichtung.

## Claims

1. A system (10) for conveying objects (72) along a transport direction (50), comprising a base (12) which forms a plurality of mechanical interfaces (24) arranged substantially next to each other transversely to the transport direction (50), and a plurality of transport units (22) each forming one single track, wherein each of the transport units (22) includes a mechanical interface (26) corresponding to at least one of the mechanical interfaces (24) of the base (12) and being adapted such that the transport units (22) can be mechanically connected to the base (12) and all of the transport units (22) can be completely detached from the base (12) separately from each other **characterized in that** the transport units (22) are provided in at least two different widths, i.e. a narrower type and a wider type, and that at least one of the mechanical interfaces (24) of the base (12) is configured and adapted to be alternately connected to a corresponding mechanical interface (26) of the narrower type (22a) or a corresponding mechanical interface (26) of the wider type (22b) such that the system (10) can be modified with regard to the number and/or width of the tracks.

2. The system (10) according to claim 1 configured for weighing objects (72) conveyed along a transport direction (50), wherein the base (12) comprises a plurality of load cells (18) arranged substantially next to each other transversely to said transport direction, each of said load cells (18) carrying a support (20) forming one of the mechanical interfaces (24) of the base (12), such that the transport units (22) are each mechanically connectable to at least one of the supports (20) for weighing an object (72) placed on the respective transport unit (22).

3. The system (10) according to claims 1 or 2, wherein the interfaces (24, 26) are configured such that the transport units (22) can be exchanged without the use of tools, and in particular with one hand.

4. The system (10) according to at least one of the preceding claims, wherein the wider type (22b) of the transport units (22) spans at least two interfaces (24) of the base (12), in particular two load cells (18).

5. The system (10) according to claim 4, wherein the wider type (22b) of the transport units (22) includes at least two interfaces (26) to be connected to at least two of the interfaces (24) of the base (12), in particular wherein the wider type (22b) of the transport units (22) is connectable to a plurality of supports (20) to load, in use, a plurality or all of the spanned load cells (18).

6. The system (10) according to at least one of the preceding claims 2 to 5, wherein the system (10) comprises at least one transport unit (22) having a coding by which the system (10) automatically recognizes to how many and/or to which of the load cells (18) the transport unit is connected.

7. The system (10) according to at least one of the preceding claims, wherein each of the attached transport units (22) can be driven separately, and wherein in particular a separate driving motor (54) is associated with each of the transport units (22).

8. The system (10) according to any one of the preceding claims, comprising a plurality of load cells (18) arranged substantially next to each other transversely to the transport direction (50), each of said load cells (18) carrying a support (20) including at least one of said mechanical interfaces (24) such that the transport units (22) are each mechanically connectable to at least one of the supports (20) in order to weigh an object placed on the respective transport unit (22), and such that the transport units (22) can each be completely detached from the associated support (20).

9. The system (10) according to at least one of the preceding claims, comprising a plurality of load cells (18) arranged substantially next to each other transversely to the transport direction (50), wherein the transport units (22) can each be mechanically connected directly or indirectly to at least one of the load cells (18) in order to weigh an object (72) placed on the respective transport unit (22), and wherein a control device is provided which is configured and adapted to determine an offset (70) in the transport direction (50) between objects (72) on the various tracks during multi-track operation.

10. The system (10) according to claim 9, wherein the control device is configured and adapted to control at least one drive unit (54) such that the offset (70) is reduced or eliminated.

11. The system (10) according to claim 9 or 10, wherein the load cells (18) are connected to the control device, and the control device is configured and adapted to determine an offset (70) of objects (72) located on the different transport units (22) on the basis of signals transmitted from the load cells (18).

12. The system (10) according to claim 13, wherein the load cells (18) are configured and adapted to continuously measure a weight force acting on the load cell (18) so that the offset (70) can be determined therefrom.

13. A method of resetting a system (10) for conveying objects (72) along a transport direction (50), in particular according to any one of the preceding claims, comprising:
- providing a base (12) comprising a plurality of mechanical interfaces (24) arranged substantially next to each other transversely to the transport direction (50), and a plurality of transport units (22) each forming one single track of different width, wherein each of the transport units (22) includes a mechanical interface (26) corresponding to at least one of the mechanical interfaces (24) of the base (12),
- determining at least one suitable transport unit (22b) among the plurality of transport units (22a, 22b) of different widths on the basis of a width of an object (72) to be transported,
- coupling the determined transport unit (22b) to the base (12) via the interfaces (24, 26) so that the transport unit (22b) is held by the base (12), in particular wherein the coupling of the determined transport unit (22b) is performed without the use of tools.

14. The method according to claim 13,
- providing a weighing device including a plurality of load cells (18) arranged substantially next to each other transversely to the transport direction (50), each of said load cells (18) carrying a support (20) having at least one of said mechanical interfaces (24),
- coupling the determined transport unit (22b) to at least one of the corresponding supports (20) via the interfaces (24, 26), so that the transport unit (22b) is mechanically connected to at least one of the load cells (18) in order to weigh an object placed on the transport unit (22b), in particular wherein the coupling of the determined transport unit (22b) is performed without the use of tools.

15. The method according to claim 13, comprising
- providing a weighing device with a plurality of weighing cells (18) arranged substantially next each to other transversely to the transport direction (50), wherein at least a first weighing cell (18) is loaded by a first transport unit (22) forming a first track (74a) and a second weighing cell (18) is loaded by a second transport unit (22) forming a second track (74b) in order to weigh an object placed on the respective transport unit (22),
- placing at least a first object (72a) on the first transport unit (22) and a second object (72b) on the second transport unit (22),
- detecting an offset (70) in the transport direction (50) between the first object (72a) and the second object (72b), in particular by measuring a time offset of measured weight forces by the first and second load cells (18),
- compensating the offset (70), in particular by differential driving of the first and second transport units (22) of the weighing device forming the different tracks (74a, 74b).

## Revendications

1. Système (10) pour transporter des objets (72) le long d'une direction de transport (50), avec une base (12) qui forme une pluralité d'interfaces mécaniques (24) agencées sensiblement les unes à côté des autres transversalement à la direction de transport (50), et une pluralité d'unités de transport (22) formant chacune exactement une piste, dans lequel chacune des unités de transport (22) présente une interface mécanique (26) correspondant à au moins une des interfaces mécaniques (24) de la base (12) et qui est conçue de telle sorte que les unités de transport (22) peuvent être reliées mécaniquement à la base (12) et que les unités de transport (22) peuvent être complètement retirées de la base (12) séparément les unes des autres, **caractérisé en ce que** les unités de transport (22) sont fournies au moins dans deux largeurs différentes, c'est-à-dire dans une variante plus étroite (22a) et dans une variante plus large (22b), et au moins une des interfaces mécaniques (24) de la base (12) est conçue et configurée pour être connectée alternativement à une interface mécanique correspondante (26) de la variante plus étroite (22a) ou à une interface mécanique correspondante (26) de la variante plus large (22b), de sorte que le système (10) peut être modifié en ce qui concerne le nombre et/ou la largeur des pistes.

2. Système (10) selon la revendication 1 pour peser des objets (72) transportés le long d'une direction de transport (50), dans lequel la base (12) comprend une pluralité de cellules de pesage (18) agencées sensiblement les unes à côté des autres transversalement à la direction de transport, dans lequel chacune des cellules de pesage (18) supporte un support (20) formant l'une des interfaces mécaniques (24) de la base (12) de sorte que les unités de transport (22) peuvent chacune être connectées mécaniquement à au moins l'un des supports (20) pour peser un objet (72) reposant sur l'unité de transport respective (22).

3. Système (10) selon la revendication 1 ou 2, dans lequel les interfaces (24, 26) sont conçues de telle sorte que les unités de transport (22) peuvent être échangées sans outil, en particulier d'une seule main.

4. Système (10) selon au moins l'une quelconque des revendications précédentes, dans lequel la variante plus large (22b) des unités de transport (22) couvre au moins deux interfaces (24) de la base (12), en particulier deux cellules de pesage (18).

5. Système (10) selon la revendication 4, dans lequel la variante plus large (22b) des unités de transport (22) présente au moins deux interfaces (26) pour une connexion à au moins deux des interfaces (24) de la base (12), en particulier dans lequel la variante plus large (22b) des unités de transport (22) peut être connectée à une pluralité de supports (20) pour agir sur une pluralité de cellules de pesage (18) ou sur la totalité de celles-ci pendant le fonctionnement.

6. Système (10) selon au moins l'une quelconque des revendications précédentes 2 à 5, dans lequel le système (10) comprend au moins une unité de transport (22) qui présente un codage au moyen duquel le système (10) reconnaît automatiquement le nombre et/ou les cellules de pesage (18) auxquelles l'unité de transport est connectée.

7. Système (10) selon l'une quelconque des revendications précédentes, dans lequel chacune des unités de transport (22) montées peut être entraînée séparément, en particulier dans lequel un moteur d'entraînement séparé (54) est associé à chacune des unités de transport (22).

8. Système (10) selon l'une quelconque des revendications précédentes, comprenant plusieurs cellules de pesage (18) agencées sensiblement les unes à côté des autres transversalement à la direction de transport (50), dans lequel chacune des cellules de pesage (18) porte un support (20) qui présente au moins l'une des interfaces mécaniques (24), de sorte que les unités de transport (22) peuvent être reliées mécaniquement à au moins l'un des supports (20) pour peser un objet reposant sur l'unité de transport respective (22), et de sorte que les unités de transport (22) peuvent être complètement retirées du support associé (20).

9. Système (10) selon au moins l'une quelconque des revendications précédentes, comprenant une pluralité de cellules de pesage (18) agencées sensiblement les unes à côté des autres transversalement à la direction de transport (50), dans lequel les unités de transport (22) peuvent être reliées chacune directement ou indirectement mécaniquement à au moins l'une des cellules de pesage (18) pour peser un objet (72) reposant sur l'unité de transport (22) respective, et dans lequel un dispositif de commande est prévu, lequel est conçu et configuré pour déterminer un décalage (70) dans la direction de transport (50) entre des objets (72) sur les différentes pistes lors d'un fonctionnement sur plusieurs voies.

10. Système (10) selon la revendication 9, dans lequel le dispositif de commande est conçu et configuré pour commander au moins un entraînement (54) de telle sorte que le décalage (70) soit réduit ou éliminé.

11. Système (10) selon la revendication 9 ou 10, dans lequel les cellules de pesage (18) sont connectées au dispositif de commande, et le dispositif de commande est conçu et configuré pour déterminer un décalage (70) d'objets (72) situés sur les différentes unités de transport (22) sur la base de signaux transmis aux cellules de pesage (18).

12. Système (10) selon la revendication 11, dans lequel les cellules de pesage (18) sont conçues et configurées pour mesurer en continu une force de poids agissant sur la cellule de pesage (18) de telle sorte que le décalage (70) puisse être déterminé à partir de celle-ci.

13. Procédé de transformation d'un système (10) pour transporter des objets (72) le long d'une direction de transport (50), en particulier selon l'une quelconque des revendications précédentes, comprenant les étapes consistant à :
- fournir une base (12) avec une pluralité d'interfaces mécaniques (24) agencées sensiblement les unes à côté des autres transversalement à la direction de transport (50), et une pluralité d'unités de transport (22a, 22b) formant chacune exactement une piste de largeur différente, dans lequel chacune des unités de transport (22a, 22b) présente une interface mécanique (26) correspondant aux interfaces (24) de la base (12),
- déterminer au moins une unité de transport appropriée (22b) à partir de la pluralité d'unités de transport de différentes largeurs fournies (22a, 22b) sur la base d'une largeur d'un objet (72) à transporter,
- coupler l'unité de transport déterminée (22b) à la base (12) par l'intermédiaire des interfaces (24, 26), de sorte que l'unité de transport (22b) est supportée par la base (12), en particulier dans lequel le couplage de l'unité de transport déterminée (22b) est effectué sans outil.

14. Procédé selon la revendication 13,
- fournir un appareil de pesage avec une pluralité de cellules de pesage (18) agencées sensiblement les unes à côté des autres transversalement à la direction de transport (50), dans lequel chacune des cellules de pesage (18) supporte un support (20) qui présente au moins l'une des interfaces mécaniques (24),
- coupler l'unité de transport déterminée (22b) à au moins un des supports correspondants (20) par l'intermédiaire des interfaces (24, 26), de sorte que l'unité de transport (22b) est reliée mécaniquement à au moins une des cellules de pesage (18) pour peser un objet reposant sur l'unité de transport (22b), en particulier dans lequel le couplage de l'unité de transport déterminée (22b) est effectué sans outil.

15. Procédé selon la revendication 13, comprenant les étapes consistant à
- fournir un dispositif de pesage avec une pluralité de cellules de pesage (18) agencées sensiblement les unes à côté des autres transversalement à la direction de transport (50), dans lequel au moins une première cellule de pesage (18) est sollicitée par un premier dispositif de transport (22) formant une première piste (74a) et une seconde cellule de pesage (18) est sollicitée par un second dispositif de transport (22) formant une seconde piste (74b) pour peser un objet reposant sur l'unité de transport respective (22),
- amener au moins un premier objet (72a) sur la première unité de transport (22) et un second objet (72b) sur la seconde unité de transport (22),
- déterminer un décalage (70) dans la direction de transport (50) entre le premier objet (72a) et le second objet (72b), en particulier par la mesure d'un décalage temporel de forces de poids mesurées à travers les première et seconde cellules de pesage (18),
- compenser le décalage (70), en particulier par un entraînement différent des première et seconde unités de transport (22) du dispositif de pesage formant les différentes pistes (74a, 74b).
